# EUROPEAN PATENT APPLICATION

(11) **EP 4 421 720 A1**
(43) Date of publication of application: **28.08.2024**
(21) Application number: 24159241.9
(22) Date of filing: 22.02.2024
(51) Int. Cl.: G06Q 20/40

(54) **SYSTEMS AND METHODS TO AUTHENTICATE A USER'S FINANCIAL CREDENTIALS**

(30) Priority: 22.02.2023 US 202363447591 P
(71) Applicant: My Life Kit Ltd, London EC2N 4AJ (GB)
(72) Inventor: TOSCANO, Romano, GX11 1AA Gibraltar (GI)
(74) Representative: Patel, Nikesh

(57) **Abstract**

Systems and methods to authenticate a user's financial credentials are provided. The method includes receiving a request to authenticate financial credentials of a user. The method also includes determining, whether the financial credentials have been preliminarily authenticated based on static data indicative of the financial credentials of the user. In response to a determination that the financial credentials have been preliminarily authenticated, the method also includes receiving dynamic data indicative of the financial credentials of the user, wherein the dynamic data are provided by an electronic device of the user. The method also includes determining whether the dynamic data are valid. In response to a determination that the dynamic data are valid, the method also includes validating the financial credentials of the user

## Description

### BACKGROUND

The present disclosure relates generally to systems and methods to authenticate a user's financial credentials.

Financial transactions are sometimes authenticated to reduce or prevent fraudulent transactions. For example, when a user initiates an online transaction with an online retailer, the user provides static data associated with the user's financial credentials, such as the user's credit card number, expiration date, location, and other static data associated with the user's financial credentials to the online retailer. The online retailer then processes the user's financial credentials, or transmits the user's financial credentials to a third party, such as a financial institution, to validate the user's credentials. The online transaction is approved once the user's financial credentials are verified.

### Brief Description of the Drawings

Illustrative embodiments of the present invention are described in detail below with reference to the attached drawing figures, which are incorporated by reference herein, and wherein:
Figure 1 is a network environment for authenticating financial credentials of a user;
Figure 2 is an illustration of an end-to-end process to process an online purchase;
Figure 3A is an illustration of an exemplary user interface containing dynamic data displayed on a smartphone;
Figure 3B is an illustration of another exemplary user interface containing dynamic data displayed on a laptop device;
Figure 4 is a system diagram of a financial credentials authentication system of figure 1;
Figure 5 is a flowchart of a process to authenticate a user's financial credentials;
Figure 6 is a flowchart of another process to authenticate a user's financial credentials;
Figures 7A-7K illustrate example user interfaces for establishing connection with a financial credential authentication system; and
Figures 8A-8G illustrate example user interfaces for verifying a financial transaction with a financial credential authentication system.

The illustrated figures are only exemplary and are not intended to assert or imply any limitation with regard to the environment, architecture, design, or process in which different embodiments may be implemented.

### Detailed Description

In the following detailed description of the illustrative embodiments, reference is made to the accompanying drawings that form a part hereof. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the embodiments described herein, the description may omit certain information known to those skilled in the art. The following detailed description is, therefore, not to be taken in a limiting sense, and the scope of the illustrative embodiments is defined only by the appended claims.

The present disclosure relates to systems and methods to authenticate a user's financial credentials. As referred to herein, financial credentials include any credentials associated with a user which may be utilized by a third party to verify the user's identity, and to determine whether the user should be approved for a financial transaction. Examples of financial credentials include, but are not limited to credit card information, address, social security number, and other types of credentials which may be utilized to verify the user's identity, and to determine whether the user should be approved for a financial transaction. For example, when a user attempts to purchase an online item from an online retailer with the user's credit card, the online retailer processes the user's credit card information and other types of static data indicative of the user's finical credentials to determine whether to approve the user's financial transaction to purchase the online item. As referred to herein, static data are data that are indicative of the user's financial credentials refer to credentials that do not change over time, or do not change within a threshold period of time. Examples of static data include, but are not limited to, credit card information, name, address, telephone number, last four digits of the user's social security number, mother's maiden name, and other types of data that do not change or do not change within a threshold period of time.

The systems and methods described herein are configured to provide an additional authentication via dynamic data indicative of the user's financial credentials. As referred to herein, dynamic data are data that are indicative of the user's financial credentials include data that are constantly changing or change within the threshold period of time which in which, static data remain constant. Examples of dynamic data include, but are not limited to the user's health, the user's credit score, the user's current environment, the current world data, as well as other types of data that are constantly changing or change within the threshold period of time which in which, static data remain constant. Additional descriptions of static data and dynamic data are provided herein. A copy of the user's dynamic data is stored on the user's electronic device, or is stored at a location that is accessible by the user's electronic device. The financial credentials authentication system also stores or is accessible to a separate copy or version of the users' dynamic data (system version of the user's dynamic data), which the financial credentials authentication system utilizes to validate the authenticity of the user's version of the dynamic data. As referred to herein, a user's version of the dynamic data refers to dynamic data stored on an electronic device of the user or is accessible by the electronic device of the user. In some embodiments, the financial credentials authentication system maintains not only up-to-date dynamic data associated with the user's financial credentials, the financial credentials authentication system also maintains previous system versions of the user's dynamic data, which are associated with the user's financial credentials at different times in the past.

In that regard, a financial credentials authentication system receives a request to authenticate financial credentials of a user, and determines whether the user's financial credentials have been preliminarily authenticated based on static data indicative of the financial credentials of the user. The financial credentials authentication system, in response to a determination that the financial credentials have been preliminarily authenticated (e.g., the static data have been verified), obtains the user's dynamic data from the user's electronic device. The financial credentials authentication system then compares the user's dynamic data obtained from the user's electronic device with the system version of the user's dynamic data to determine whether to authenticate the user's version of the dynamic data obtained from the user's electronic device. For example, where the user's version of the dynamic data obtained from the user's electronic device includes data indicative of the user's health, the user's credit score, the user's current environment, and the current world data, the financial credentials authentication system obtains a system version of the user's dynamic data indicative of the user's health, the user's credit score, the user's current environment, and the current world data, and determines whether the user's version of the dynamic data is valid. In some embodiments, where the user's dynamic data form a numeral value, the financial credentials authentication system compares the numerical value associated with the user's version of the dynamic data with the system version of the user's dynamic data to determine whether the user's version of the dynamic data is valid. In some embodiments, where different components of the user's version of the dynamic data are associated with different numerical values, the financial credentials authentication system compares each component of the user's version of the dynamic data with a corresponding component of the system version of the user's dynamic data to determine whether the user's version of the dynamic data is valid. For example, where the user's version of the dynamic data includes a value associated with the user's health (e.g., 350 or 350/500), a value associated with the user's credit (e.g., 140 or 140/300), a value associated with the user's current environment (e.g., 85 or 85/100), and a value associated with the current world conditions (e.g., 65 or 65/100), the financial credentials authentication system extracts values associated with the user's health, the user's credit, the user's current environment, and the current world conditions from the system version of the user's dynamic data, and compares the corresponding values to determine whether the user's version of the dynamic data is valid. In some embodiments, the financial credentials authentication system also requests the user's electronic device to provide previous user versions of the dynamic data (e.g., generated one day ago, one week ago, or two weeks ago), and compares the previous user versions of the dynamic data with corresponding system versions of the user's dynamic data (e.g., generated one day ago, one week ago, or two weeks ago) to provide additional authentication.

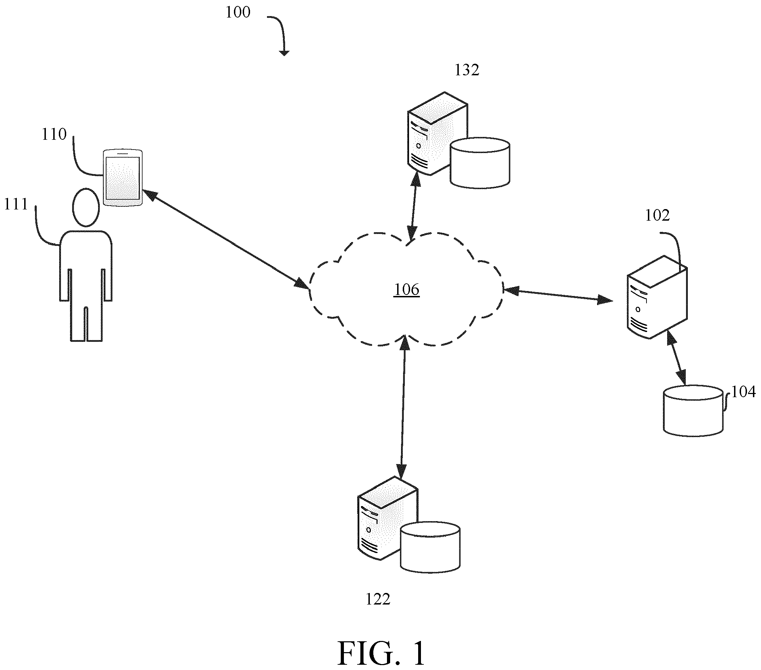

The financial credentials authentication system validates the user's financial credentials in response to determining that the dynamic data obtained from the user's electronic device (the user's version of the dynamic data) is valid. In some embodiments, the financial credentials authentication system, in response to a determination that the user's version of the dynamic data is valid, requests a financial institution to authorize a financial transaction. In some embodiments, the financial credentials authentication system, in response to a determination that the user's version of the dynamic data is not valid, requests the financial institution to decline the financial transaction. Additional descriptions of the financial credentials authentication system and operations performed by the financial credentials authentication system are provided in the paragraphs below and are illustrated in at least Figures 1-6.

Figure 1 is a network environment 100 for authenticating financial credentials of a user in accordance with one embodiment. Network environment 100 includes a financial credentials authentication system 102 that is communicatively connected to an electronic device 110 of a user 111, an online retailer system 122, and a financial institution system 132 via a network 106.

In the embodiment of figure 1, electronic device 110 is a smartphone configured to provide a user such as user 111 with frontend interfaces to engage in financial transactions such as, but not limited to, online purchases or sales, mortgages, online investing, mobile banking, and other types of financial transactions. In the embodiment of figure 1, electronic device 110 is configured to transmit financial credentials to third-party electronic devices and systems, such as online retailer system 122, financial institution system 132, financial credentials authentication system 102, or other third-party electronic devices.

In the embodiment of figure 1, during an online transaction, electronic device 110 transmits static data indicative of the financial credentials of user 111 (e.g., credit card information and address of user 111) to financial institution system 132 for preliminarily authentication. Financial institution system 132 determines the validity of the static data, and in response to a determination that the static data transmitted from electronic device 110 is valid, requests electronic device 110 to also provide dynamic data indicative of the financial credentials of user 111 for additional authentication.

In the embodiment of Figure 1, electronic device 110 is a smartphone. Additional examples of electronic devices include, but are not limited to, laptop computers, tablet computers, smart watches, virtual reality systems, augmented reality systems, as well as similar electronic devices having a processor operable to provide dynamic data indicative of a user's financial credentials that are locally stored or locally accessible for validation of the user's financial credentials. Electronic device 110 determines whether the financial credentials of user 111 have been preliminarily authenticated based on the static data, and in response to a determination that the financial credentials have been preliminarily authenticated (e.g., by financial institution system 132) obtains login credentials to access dynamic data indicative of the financial credentials of user 111. In some embodiments, electronic device 110 provides a login interface for display, where the login credentials are inputted through the login interface. Electronic device 110, after validating the login information of user 111, transmits the user's version of the dynamic data indicative of the financial credentials of user 111 to financial credentials authentication system 102. In some embodiments, electronic device 110 transmits the user's version of the dynamic data to an electronic device or system of a vendor such as online retailer system 122, where the data are retransmitted (directly or indirectly) to financial credentials authentication system 102. In some embodiments, electronic device 110 transmits the user's version of the dynamic data to an electronic device or system of a financial institution, such as financial institution system 132, where the data are retransmitted (directly or indirectly) to financial credentials authentication system 102. In some embodiments, electronic device 110 directly transmits the user's version of the dynamic data to financial credentials authentication system 102.

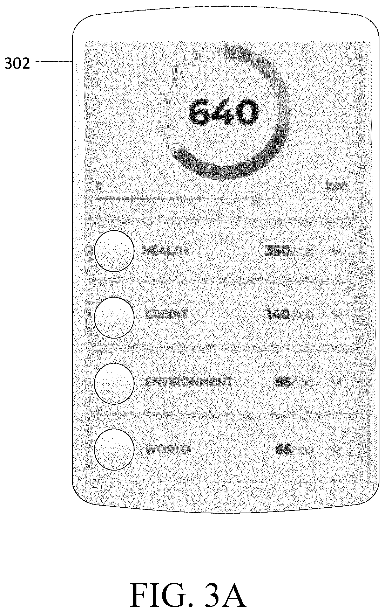

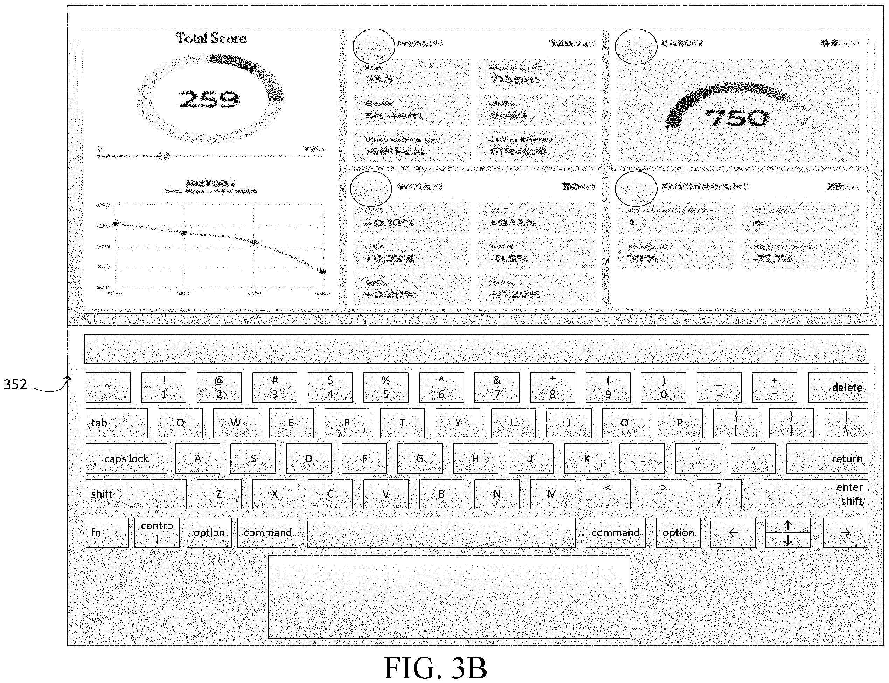

In some embodiments, electronic device 110, after validating the login information of user 111, provides the dynamic data indicative of the financial credentials of user 111 for display. For example, where the dynamic data include data indicative of the health of user 111, the credit score of user 111, the current environment of user 111, and the current world date, electronic device 110 provides values associated with the health of user 111, the credit score of user 111, the current environment of user 111, and the current world data that are stored on electronic device 110 for display. In one or more of such embodiments, electronic device 110 also stores and is configured to provide previous user versions of the dynamic data and values associated with one or more components of the previous user versions of the dynamic data for display. Additional descriptions of dynamic data and descriptions of exemplary user interfaces that display the dynamic data are provided in the paragraphs below and are illustrated in at least figures 3A and 3B.

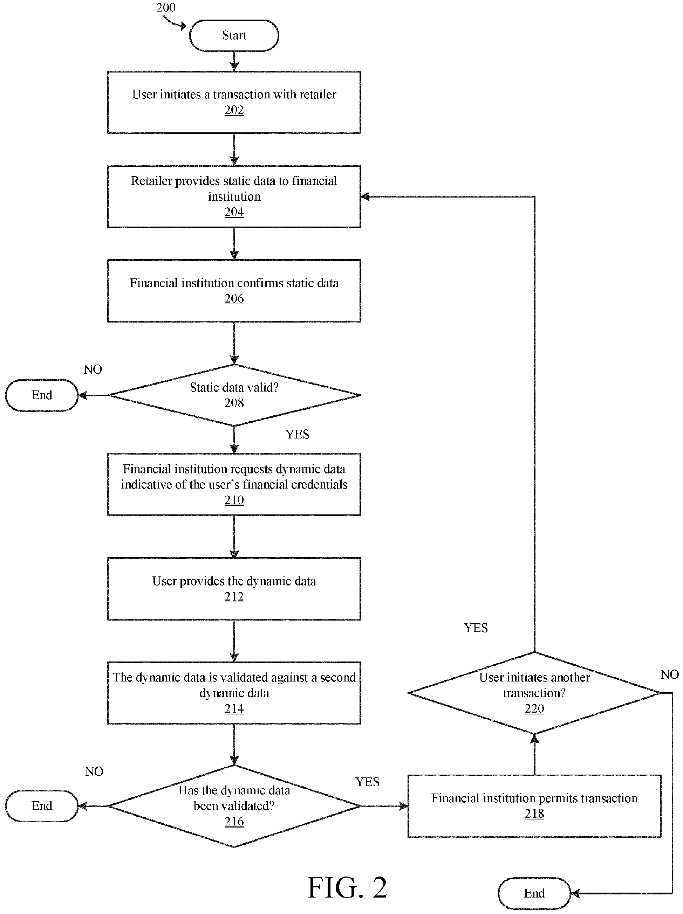

Financial credentials authentication system 102 may be formed from one or more work management stations, server systems, desktop computers, laptop computers, tablet computers, smartphones, smart watches, virtual reality systems, augmented reality systems, as well as similar electronic devices having one or more processors operable to authenticate and validate the user's version of the dynamic data that are indicative of a user's financial credentials, and determine the validity of the user's version of the dynamic data. In the embodiment of figure 1, financial credentials authentication system 102 receives a request (such as from online retailer system 122, financial institution system 132, or from another electronic device or system) to authenticate the financial credentials of user 111, and determines whether the financial credentials of user 111 have been preliminarily authenticated. After financial credentials authentication system 102 determines that financial credentials of user 111 have been preliminarily authenticated, financial credentials authentication system 102 receives the user's version of the dynamic data provided by (or initially provided by) electronic device 110. Financial credentials authentication system 102 determines the validity of the user's version of the dynamic data by comparing the user's version of the dynamic data with a system version of the user's dynamic data that is stored on a storage medium of financial credentials authentication system 102, such as storage medium 104, or on another backend storage medium (not shown) that is accessible to financial credentials authentication system 102. Financial credentials authentication system 102 validates the financial credentials of the user such as user 111 in response to a determination that the user's version of the dynamic data is valid. In some embodiments, the financial credentials authentication system 102 also requests the vendor, such as online retailer system 122, or the financial institution such as financial institution system 132 to authorize the financial transaction. In some embodiments, financial credentials authentication system 102, in response to a determination that the user's version of the dynamic data is not valid, requests the vendor, such as online retailer system 122, or the financial institution such as financial institution system 132 to decline the financial transaction. Additional descriptions of operations performed by financial credentials authentication system 102 are provided herein and are illustrated in at least figures 2 and 4-6.

Financial credentials authentication system 102 includes or is communicatively connected to a storage medium, such as storage medium 104. Storage medium 104 stores instructions, which when executed by one or more processors of financial credentials authentication system 102, cause the processors to perform the foregoing operations as well as other operations described herein. Storage medium 104, in addition to storing executable instructions, also stores dynamic data of users such as user 111. Storage medium 104 may be formed from data storage components such as, but not limited to, read-only memory (ROM), random access memory (RAM), flash memory, magnetic hard drives, solid state hard drives, CD-ROM drives, DVD drives, floppy disk drives, as well as other types of data storage components and devices. In some embodiments, storage medium 104 includes multiple data storage devices. In further embodiments, the multiple data storage devices may be physically stored at different locations. In one of such embodiments, the data storage devices are components of a server station, such as a cloud server. In another one of such embodiments, the data storage devices are components of financial credentials authentication system 102.

Network 106 can include, for example, any one or more of a cellular network, a satellite network, a personal area network (PAN), a local area network (LAN), a wide area network (WAN), a broadband network (BBN), an RFID network, a Bluetooth network, a device-to-device network, the Internet, and the like. Further, network 106 can include, but is not limited to, any one or more of the following network topologies, including a bus network, a star network, a ring network, a mesh network, a star-bus network, a tree or hierarchical network, or similar network architecture. Network 106 may be implemented using different protocols of the internet protocol suite such as TCP/IP. Network 106 includes one or more interfaces for data transfer. In some embodiments, network 106 includes a wired or wireless networking device (not shown) operable to facilitate one or more types of wired and wireless communication between financial credentials authentication system 102, electronic device 110, systems 122 and 132, as well as other electronic devices (not shown) and systems (not shown) communicatively connected to network 106. Examples of the networking device include, but are not limited to, wired and wireless routers, wired and wireless modems, access points, as well as other types of suitable networking devices described herein. Examples of wired and wireless communication include Ethernet, WiFi, Cellular, LTE, GPS, Bluetooth, and RFID, as well as other types of communication modes described herein.

Although Figure 1 illustrates one electronic device 110, in some embodiments, financial credentials authentication system 102 is communicatively connected to multiple electronic devices, each configured to provide a corresponding user version of dynamic data of the corresponding user's financial credentials. In one or more of such embodiments, financial credentials authentication system 102 is configured to perform operations described herein to concurrently and/or sequentially determine the validity of multiple user versions of different users' financial credentials.

Further, although Figure 1 illustrates financial credentials authentication system 102 as a single system, in some embodiments, financial credentials authentication system 102 is communicatively connected to a different number of systems and configured to instruct one or more of the systems to work in parallel. In one or more of such embodiments, some of the operations described herein are performed by different systems that work in parallel to balance the workload. For example, financial credentials authentication system 102, in response to receiving instructions to validate a user's version of dynamic data indicative of the user's financial credentials, requests multiple systems to validate different portions of the user's version of the dynamic data (e.g., assign a first system to validate the user's credit score portion, assign a second system to validate the user's health score portion, assign a third system to validate the user's current conditions, etc.). The foregoing operations reduce the workload of a single system, thereby reducing not only the duration of the operation, but also the stress on a single system. Similarly, where financial credentials authentication system 102 receives multiple requests to process different users' financial credentials, financial credentials authentication system 102 is configured to request different systems of financial credentials authentication system 102 to process different requests to balance the number of requests among the multiple systems of financial credentials authentication system 102. The foregoing operations reduce the workload of a single system, thereby reducing not only the duration of the operation, but also the stress on a single system.

Although figure 1 illustrates financial credentials authentication system 102 as a standalone backend system, in some embodiments, financial credentials authentication system 102 is a system of a financial institution or a third-party vendor. For example, in some embodiments, financial credential authentication system 102 is a component of a server of a financial institution, such as a bank. In that regard, the operations described herein are performed by financial credential authentication system 102 directly receives a request from the user for a financial transaction (e.g., to purchase a television), requests the user device to provide user data and user scores described herein, compares the received user data and user scores with corresponding user data and user scores to verify the user, and completes the transaction if the received user data and user scores match (or fall within a threshold range) of the corresponding user data and user scored that are stored on the backend, or rejects the transaction (or requests additional user verification) if the received user data and user scores do not match (or fall within the threshold range) of the corresponding user data and user scores. In some embodiments, financial credential authentication system 102 requires different types of verifications based on the size and the type of transactions. For example, a purchase for a good valued at less than $100 requires a first threshold amount of verification, and a purchase for a good valued at $10,000 requires a second threshold amount of verification that is greater than the first threshold amount of verification.

Figure 2 is an illustration of an end-to-end process to process an online purchase. Although the operations in process 200 are shown in a particular sequence, certain operations may be performed in different sequences or at the same time where feasible.

At block 202, a user initiates a transaction with a retailer, such as to purchase a television from an online vendor. The user also provides the user's static data such as credit card information to the retailer to pay for the transaction. At block 204, the retailer provides the static data to a financial institution to verify the static data. At block 206, the financial institution confirms the static data, and at block 208, the financial institution determines whether the static data are valid. Process 200 ends and the transaction is denied in response to a determination that the static data are not valid. Alternatively, and in response to a determination that the static data are valid, process 200 proceed to block 210, and the financial institution requests dynamic data indicative of the user's financial credentials. At block 212, the user provides the user's version of the dynamic data that is stored on the user's electronic device or is accessible by the user's electronic device.

At block 214, the user's version of the dynamic data is validated against a second set of dynamic data (system version of the user's dynamic data). In the embodiment of figure 1, financial credentials authentication system 102 performs operations described herein to compare the user's version of the dynamic data with the system version of the user's dynamic data to determine the validity of the user's version of the dynamic data. In some embodiments, each component of the user's dynamic data is validated against a corresponding component of the system's version of the dynamic data. For example, where the user's version of the dynamic data includes the user's health score and the user's credit score, the user's version of the user's health score and the user's credit score are compared with the system's version of the user's health score and the user's credit score, respectively. In one or more of such embodiments, the user's version of the dynamic data is validated if each component of the user's version of the user's health score matches a corresponding component of the system's version of the user's dynamic data. In one or more of such embodiments, the user's version of the dynamic data is validated if each component of the user's version of the health score is within a range of a corresponding component of the system's version of the user's dynamic data. For example, where a value associated with the user's credit obtained from the user's version of the dynamic data is 350, a corresponding value of the user's credit obtained from the system version of the dynamic data is 360, and a tolerable range is +/-20 from the system version of the user's credit, then the user's credit component is validated.

Alternatively, where a value associated with the user's health obtained from the user's version of the dynamic data is 400, a corresponding value of the user's health obtained from the system version of the dynamic data is 350, and a tolerable range is +/-30 from the system version of the user's health, then the user's health component is not validated, and a request to deny the transaction is generated. In some embodiments, the financial credentials authentication system assigns different tolerable ranges to different components of the dynamic data. For example, the financial credentials authentication system is configured to tolerate the user's version of the user's credit component of the dynamic data to vary within a +/-20 range of the system's version of the user's credit component of the dynamic data, and is configured to tolerate user's version of the user's health component of the dynamic data to vary within a +/-30 range of the system's version of the user's health component of the dynamic data. In some embodiments, where a total value is associated with all of the components of the user's dynamic data, the financial credentials authentication system compares the total value of the user's version of the dynamic data to the total value of the system's version of the user's financial credentials, and determines whether to validate the user's version of the financial credentials based on whether the total value matches, or in some embodiments, falls within a threshold range of a corresponding total value associated with the system's version of the user's dynamic data.

At block 216, and in response to a determination not to validate the dynamic data, the user's transaction is denied, and process 200 ends. Alternatively, at block 216, and in response to a determination to validate the dynamic data, process 200 proceeds to block 218, and the financial institution permits the transaction. At block 220, in response to a determination that the user has not initiated another transaction, process 200 ends. Alternatively, at block 220, and in response to a determination that the user has initiated another transaction, process 200 proceeds to block 204, and certain operations described herein are repeated.

Figure 3A is an illustration of an exemplary user interface containing dynamic data displayed on a smartphone 302. In the embodiment of figure 3A, dynamic data of the user include four different components, the user's health, the user's credit, the user's environment, and current world conditions. Further, each component is represented by a value and a total value. In the embodiment of figure 3A, the user's health has a value of 350 out of a total value of 500, the user's credit has a value of 140 out of a total value of 300, the user's environment has a value of 85 out of a total value of 100, and the current world condition has a value of 65 out of a total value of 100. Further, a total value of all of the components of the user's dynamic data is 640 out of a total value of 1,000. Each component of the user's dynamic data is subject to change. For example, the value of the user's environment dynamically increases if the user visits a national park, and dynamically decreases if the user is near an international conflict zone. Similarly, the value of the user's health dynamically and (gradually) increases after a week of dieting and exercising, and dynamically decreases after the user experiences cardiac arrest and is sent to a hospital. In that regard, one or more components of the user's dynamic data are dynamically changing, and the values associated with each component of the user's dynamic data, and the total value associated with the user's dynamic data are also dynamically changing. Smartphone 302 is configured to periodically or dynamically store the user's dynamic data and corresponding values associated with the user's dynamic data at different times. Further, smartphone 302, in response to a request to provide the user's version of the dynamic data, provides the user's version of the dynamic data, such as to financial credentials authentication system 102 of figure 1 to validate the user's financial credentials.

Figure 3B is an illustration of another exemplary user interface containing dynamic data displayed on a laptop device 352. In the embodiment of FIG. 3B, laptop device 352 provides additional information regarding each component of the user's health, the user's credit, the user's environment, and current world conditions. For example, the user's health component indicates that the user's BMI is 23.3, the user's resting heart rate is 71 beats per minute, the user has slept for 5 hours and 44 minutes, the user has taken 9660 steps, the user's resting energy is 1,681 Kcal, and the user has expended 606 Kcal of active energy. In some embodiments, one or more subcomponents of a component of the user's dynamic data are analyzed to validate the user's financial credentials. For example, financial credentials authentication system 102 receives the user's version of the user's BMI, resting heart rate, sleep duration, steps taken, resting energy, and active energy provided by laptop 352, and compares the values associated with each subcomponent with a corresponding subcomponent obtained from a system version of the user's dynamic data. In some embodiments, the financial credentials authentication system 102 validates the user's financial credentials if each subcomponent of the user's version of the dynamic data matches or falls within a threshold range of the corresponding subcomponent of the system's version of the user's dynamic data. Continuing with the foregoing example, where the user's version of the user's BMI is 23.3, and the system's version of the user's BMI is 23.5, the user's financial credentials are rejected if the tolerable threshold is less than 0.2. Alternatively, where the user's version of the user's resting energy is 1,681Kcal, and the system's version of the user's resting energy is 1,680Kcal, the user's financial credentials are validated if the tolerable threshold is less than 100Kcal, and provided that the other validation criteria are met.

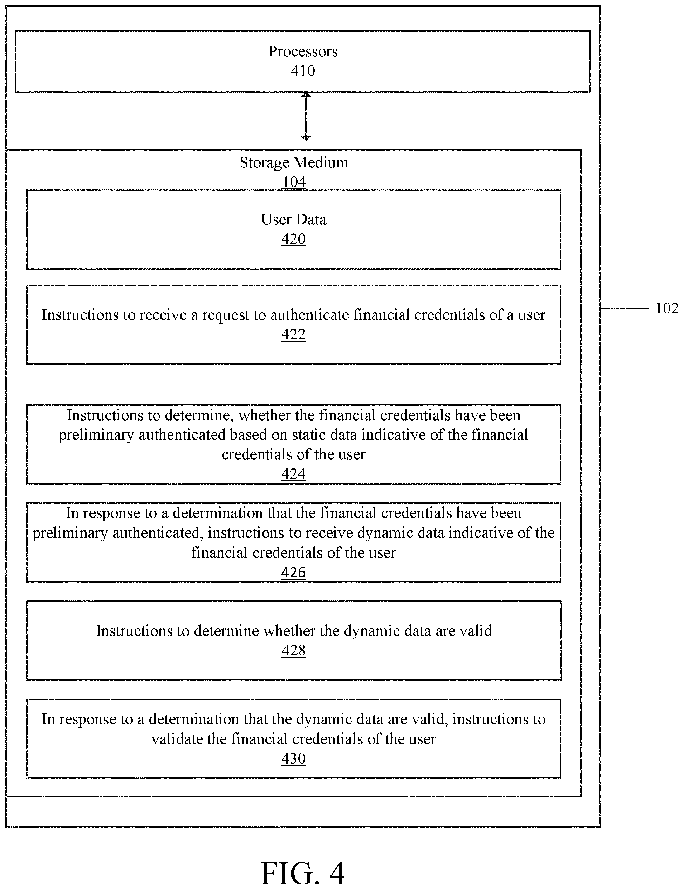

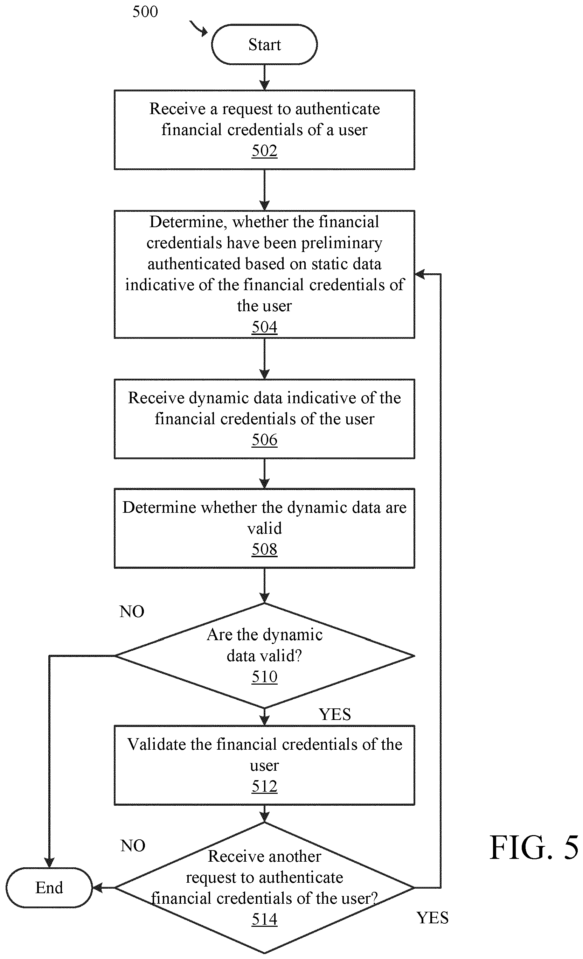

Although figures 3A and 3B illustrate four components of the user's dynamic data, in some embodiments, the user's dynamic data include a different number of components which are compared with corresponding components of the system's version of the user's dynamic data to determine whether to verify the user's financial credentials. Similarly, although figure 3B provides an exemplary illustration of different subcomponents of the user's dynamic data. It is understood that in some embodiments, different combinations of subcomponents of the user's dynamic data are compared with corresponding subcomponents of the system's version of the user's dynamic data to determine whether to verify the user's financial credentials. In some embodiments, only some but not all of the components and subcomponents of the user's version of the dynamic data are compared with the corresponding components and subcomponents of the system's version of the user's dynamic data to validate the user's financial credentials. For example, the number of user's steps taken are not taken into consideration when determining whether to validate the user's financial credentials. In some embodiments, different components or subcomponents are weighted differently when determining whether to validate the user's financial credentials. For example, the user's credit score is given a higher weight than the current world data when determining whether to validate a financial transaction to purchase a box of chocolates. Additional descriptions of operations performed by the financial credentials authentication system to validify the user's dynamic data are provided herein, and are further illustrated in figures 4 and 5.

Figure 4 is a system diagram of financial credentials authentication system 102 of Figure 1 in accordance with one embodiment. Financial credentials authentication system 102 includes or is communicatively connected to storage medium 104 and processors 410. Data indicative of a user's dynamic data and other data associated with the user ("user data") are stored at location 420 of storage medium 104. Instructions to receive a request to authenticate financial credentials of a user are stored at location 422. Further, instructions to determine, whether the financial credentials have been preliminarily authenticated based on static data indicative of the financial credentials of the user are stored at location 424. Further, in response to a determination that the financial credentials have been preliminarily authenticated, instructions to receive dynamic data indicative of the financial credentials of the user, where the dynamic data are provided by an electronic device of the user are stored at location 426. Further, instructions to determine whether the dynamic data are valid are stored at location 428. Further, in response to a determination that the dynamic data are valid, instructions to validate the financial credentials of the user are stored at location 430. Further, instructions to perform operations described herein and shown in at least Figure 5 are also stored in storage medium 104.

Figure 5 is a flow chart illustrating a process 500 to authenticate a user's financial credentials in accordance with one embodiment. Although the operations in process 500 are shown in a particular sequence, certain operations may be performed in different sequences or at the same time where feasible. Further, although process 500 is described to be performed by processors of financial credentials authentication system 102 of figure 1, it is understood that processors of other financial credentials authentication systems are also operable to perform process 500.

At block 502, a financial credentials authentication system, such as financial credentials authentication system 102 of figure 1 receives a request to authenticate the financial credentials of a user. At block 504, the financial credentials authentication system determines whether the financial credentials of the user have been preliminary authenticated based on static data indicative of the financial credentials of the user. At block 506, the financial credentials authentication system receives dynamic data indicative of the financial credentials of the user (user's version of the dynamic data indicative of the financial credentials of the user). Figures 3A and 3B, for example, illustrate exemplary user interfaces containing information regarding certain components and subcomponents of the financial credentials of the user. In the embodiments of figures 3A and 3B, the user's financial credentials contain four different components, and in the embodiment of figure 3B, each component contain additional subcomponents, which are utilized by the financial credentials authentication system to validify the user's financial credentials.

At block 508, the financial credentials authentication system determines whether the user's version of the dynamic data is valid. In some embodiments, the financial credentials authentication system compares the user's version of the dynamic data with a system version of the user's dynamic data to determines whether data or values associated with the user's version match or are within a threshold range of corresponding data or values associated with the system's version of the user's dynamic data. For example, in the embodiment of figure 3A, where the total value associated with the user's version of the user's version of the dynamic data is 640 points, the financial credentials authentication system determines points associated with the system version of the user's dynamic data (e.g., 650 points), and determines that the user's version of the dynamic data is valid if the user's version matches or falls within a threshold range (e.g., within +/-20 point range) of the system's version of the user's dynamic data. In some embodiments, the financial credentials authentication system also obtains previous user versions of the dynamic data and compares the previous user versions of the dynamic data with previous system versions of the user's dynamic data that were generated at the same time or within a threshold period of each other. For example, the financial credentials authentication system also compares user's previous versions of the dynamic data that are one day and three days old with previous system versions of the user's dynamic data that are one day and three days old, respectively, and validates the user's credentials if the user's previous versions of the dynamic data match or are within a threshold range of the system's previous versions of the dynamic data. Additional descriptions of operations performed by the financial credentials authentication system to compare the user's version of the dynamic data with the system's version of the user's dynamic data, and to determine whether the user's version of the dynamic data is valid are provided herein.

At block 510, and in response to a determination that the user's version of the dynamic data is not valid, the financial credentials authentication system denies to validate the user's financial credentials, and the process ends. In some embodiments, the financial credentials authentication system in response to a determination that the user's version of the dynamic data is not valid, requests a financial institution (e.g., financial institution system 132 of figure 1) to deny the financial transaction. In some embodiments, the financial credentials authentication system in response to a determination that the user's version of the dynamic data is not valid, requests the user's electronic device to re-transmit a more up-to-date user's version of the dynamic data. Alternatively, at block 510, and in response to a determination that the user's version of the dynamic data is valid, process 500 proceeds to block 512, and the financial credentials authentication system validates the financial credentials of the user. In some embodiments, the financial credentials authentication system in response to a determination that the user's version of the dynamic data is valid, requests the financial institution to authorize a financial transaction. Process 500 then proceeds to block 514. At block 514, if the financial credentials authentication system does not receive another request the authenticate the financial credentials of the user, process 500 ends. Alternatively, at block 514, if the financial credentials authentication system receives another request to authenticate the financial credentials of the user, process 500 proceeds to block 504, and some of the operations described herein are repeated.

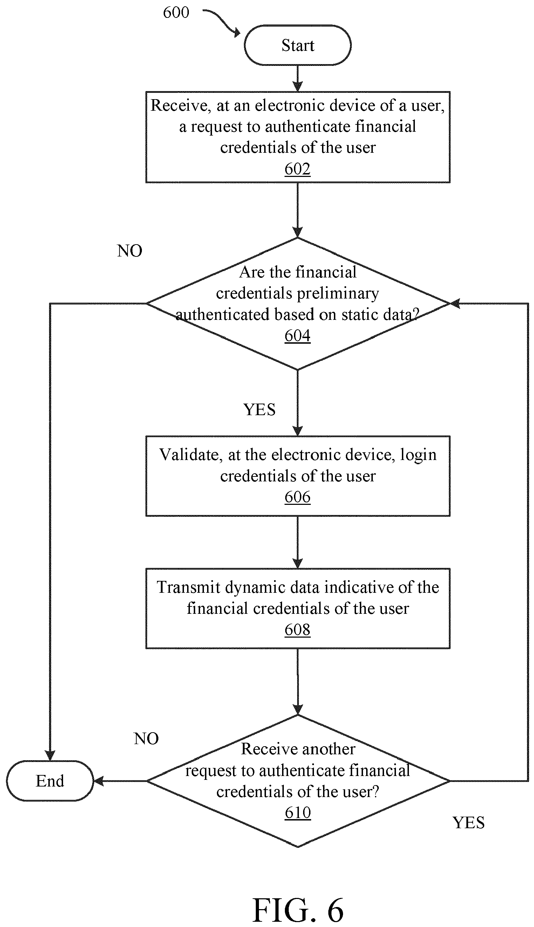

Figure 6 is a flowchart of another process 600 to authenticate a user's financial credentials, where process 600 is performed by an electronic device of the user, such as electronic device 110 of figure 1. Although the operations in process 600 are shown in a particular sequence, certain operations may be performed in different sequences or at the same time where feasible. Further, although process 600 is described to be performed by processors of electronic device 110 of figure 1, it is understood that processors of other electronic devices are also operable to perform process 600.

An electronic device of a user initially transmits certain static data (e,g., the user's credit card information) to initiate or to complete a financial transaction. At block 602, the electronic device receives a request to authenticate financial credentials of a user to complete the financial transaction. In some embodiments, the electronic device receives a notification after the financial credentials of the user are preliminary authenticated based on the static data of the user. At block 604, in response to a determination that the financial credentials of the user are preliminary authenticated based on static data, process 600 proceeds to block 606 and the electronic device validates login credentials of the user. In some embodiments, the electronic device, in response to the determination that the financial credentials have been preliminarily authenticated, provides a login interface for display, where the login credentials are inputted by the user via one or more input devices through the login interface.

Alternatively, at block 604, and in response to a determination that the financial credentials of the user are not preliminary authenticated based on the static data, process 600 ends and the user is not prompted to enter login information to access the user's dynamic data. In some embodiments, after the electronic device verifies the user's login information, the electronic device provides a user interface similar or identical to the user interface of figure 3A or 3B to provide additional information regarding the user's dynamic data for display. In some embodiments, the electronic device, after determining that the financial credentials of the user have been preliminarily authenticated, determines the up-to-date values associated with one or more components of the user's financial credentials (e.g., the user's credit, the user's health, etc.), generates the up-to-date values associated with the components, and provides the up-to-date values for display, such as via the interface of figure 3A or 3B. In some embodiments, the electronic device dynamically updates the user's financial credentials, components (and subcomponents) of the user's financial credentials, and values associated with the user's financial credentials and components (and subcomponents) of the user's financial credentials, and provides the updated data for display on the interface of figure 3A or 3B.

At block 608, the electronic device transmits dynamic data indicative of the financial credentials of the user that are stored on the electronic device or are accessible by the electronic device (the user's version of the dynamic data). In the embodiment of figure 1, the user's version of the dynamic data is received by financial credentials authentication system 102 to determine the validity of the user's financial credentials. For example, the processor of financial credentials authentication system 102 performs operations at blocks 508, 510, and 512 to determine whether to validate the user's financial credentials. Additional descriptions of operations performed by the financial credentials authentication system to validate the user's financial credentials are provided herein.

In some embodiments, the electronic device also transmits previously obtained user versions of the dynamic data (e.g., one day prior, one week prior, etc.), and provides the financial credentials authentication system with the previously obtained user versions of the dynamic data for comparison and to add an additional layer of validation and fraud protection. In some embodiments, the electronic device receives an indication that the user's financial credentials have been approved, and provides a notification of the user's approval for display. Alternatively, in some embodiments, the electronic device receives an indication that the user's financial credentials have been rejected, and provides a notification of the rejection for display. At block 610, the electronic device determines whether another request to authenticate the financial credentials of the user has been received. Process 600 ends (or times out) if no additional request to authenticate the user's financial credentials is received (or received within a threshold period). Alternatively, at block 610, and in response to receiving another request to authenticate the financial credentials of the user, process 600 returns to block 604, where some of the operations described herein are repeated.

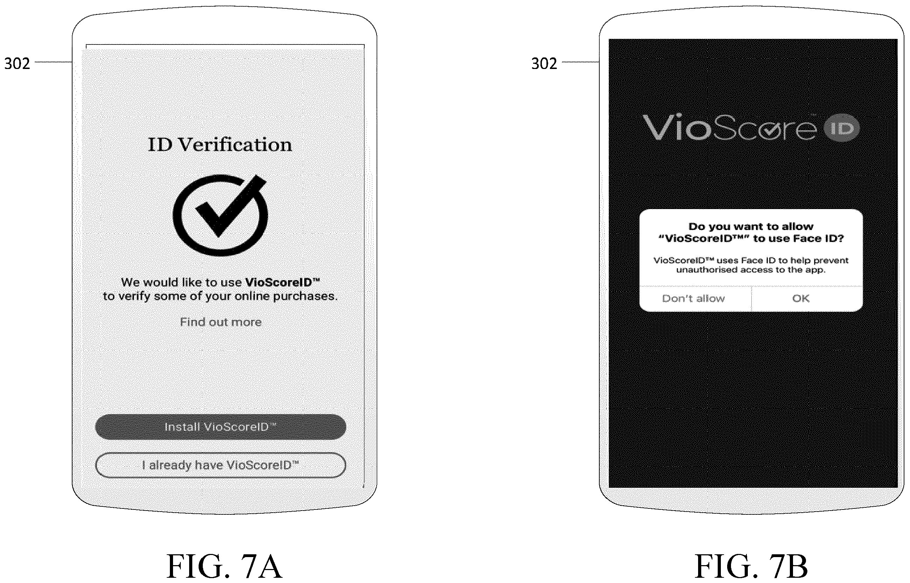

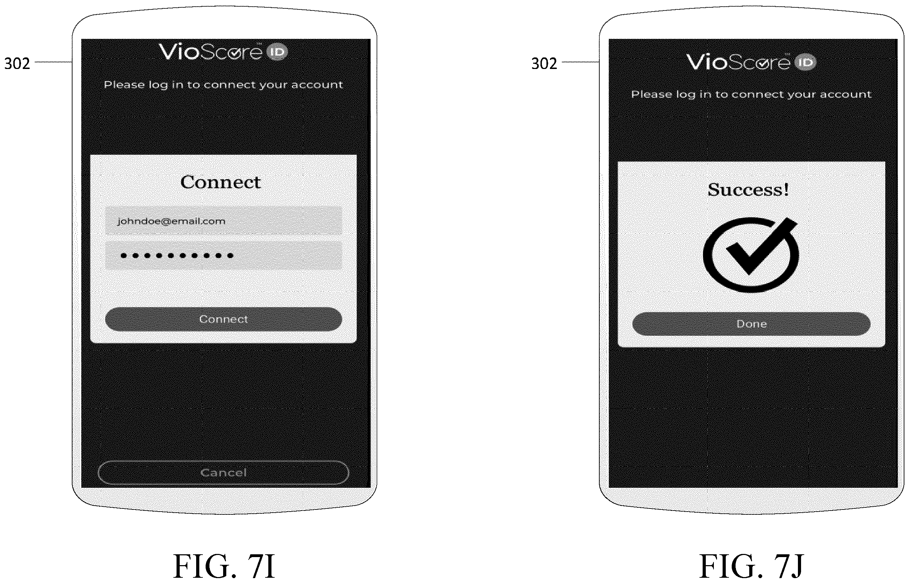

Figures 7A-7K illustrate example user interfaces for establishing connection with a financial credential authentication system. In the embodiment of FIG. 7A, a user is prompted to install an application (e.g., VioScoreID^{™}) to facilitate verification of the user's financial credentials. In the embodiment of FIG. 7B, and once the application is installed and is running on the user's device 302, the user is prompted to set up additional security measures, such as by facial recognition to log into the application.

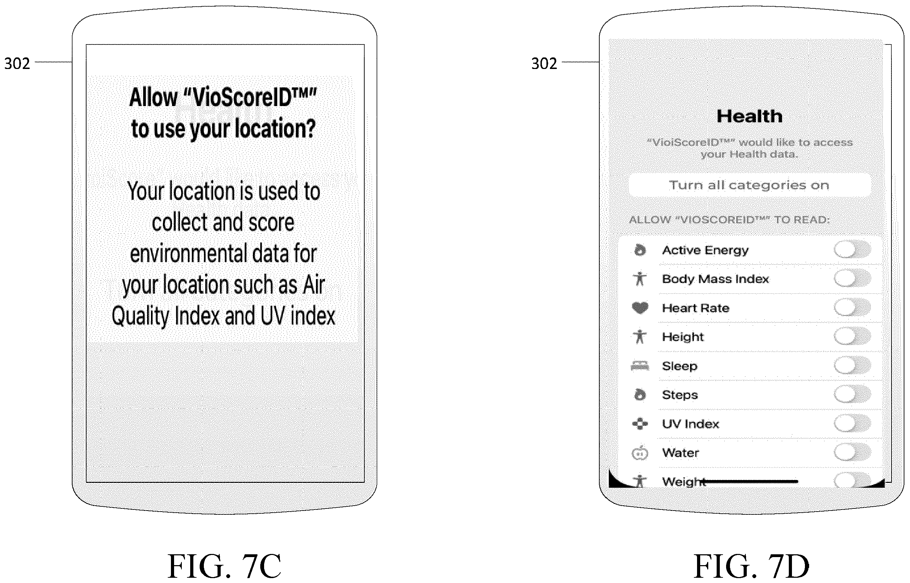

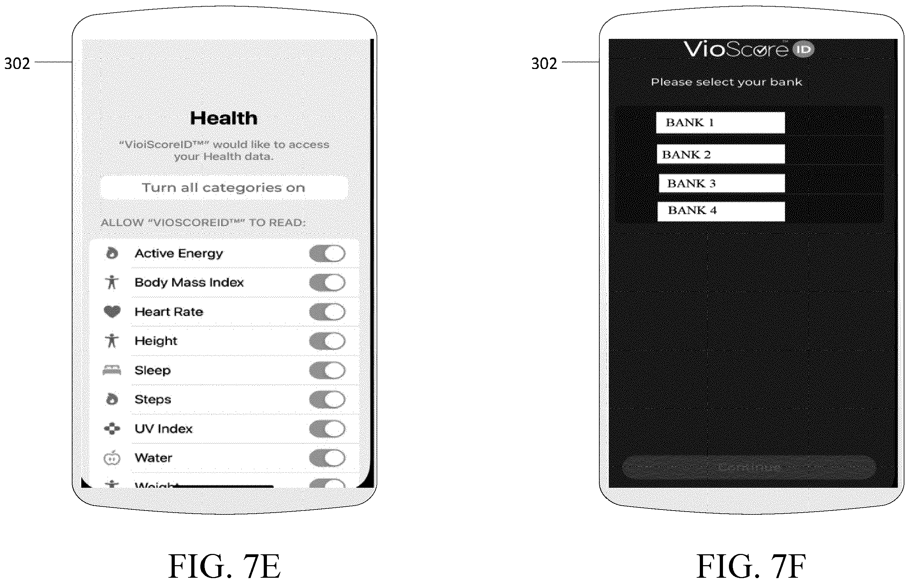

In the embodiment of FIG. 7C, the user is queried to permit the application to obtain the user's location. In some embodiments, the user's location is utilized to obtain and determine environmental data. In some embodiments, the user's location is also used to determine the user's health data. Additional descriptions of operations performed to determine the user's health data and environmental data based on the user's location are provided herein. In the embodiment of FIG. 7D, the user is prompted to permit the application to obtain health related data including, but not limited to, active energy, body mass index, heart rate, height, sleep, steps, UV index, water, weight, gait, posture, and other metrics associate with the user's health. In the embodiment of FIG. 7E, the user has approved the application to obtain active energy, body mass index, heart rate, height, sleep, steps, UV index, water, weight, gait, and posture of the user. In some embodiments, the user approves the application to obtain some but not all of the available selections. In some embodiments, different weights are applied to different categories of the user's health data. Additional descriptions of determining the user's health data and scores associated with the user's health data are provided herein.

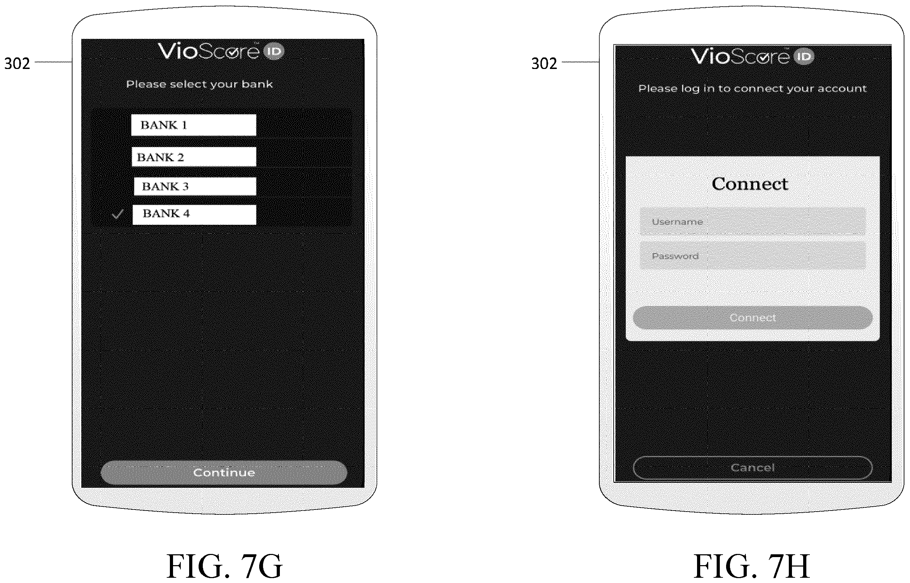

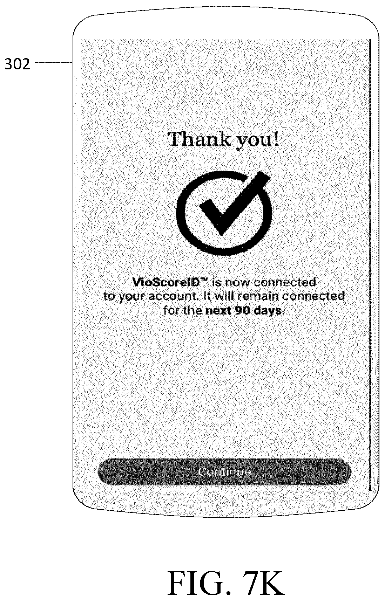

In the embodiment of FIG. 7F, the user selects a financial institution that the user would like to connect to. In some embodiments, the user selects the financial institution that the user would like the financial credential authentication system to share the user's scores with. In one or more of such embodiments, the user's scores and data that are saved locally on the user device 302 or are locally accessible by user device 302 are shared with the financial institution. In the embodiment of FIG. 7G, the user selects the financial institution the user seeks to connect to, such as Bank 4. In the embodiment of FIGS. 7H and 71, the user is prompted to enter and enters the user's credentials with Bank 4 to connect with Bank 4. In the embodiment of FIG. 7J, an indication of successful connection is displayed on the user's device 302. Alternatively, in some embodiments, where the user entered credentials are incorrect, the user is prompted to reenter the user's credentials. In the embodiment of FIG. 7K, the user is notified that the user's bank account with Bank 4 has been successfully connected, and will remain connected for 90 days. In some embodiments, once the user is connected to a financial institution, the user's locally stored scores and data are accessible to the financial institution to verify the user's transactions through the financial instruction for the duration (e.g., 90 days). For example, once the user has successfully connected to Bank 4, the user's data and scores that are locally stored on user device 302 will be automatically shared (with the user's consent) with Bank 4 for 90 days to verify additional transactions with Bank 4.

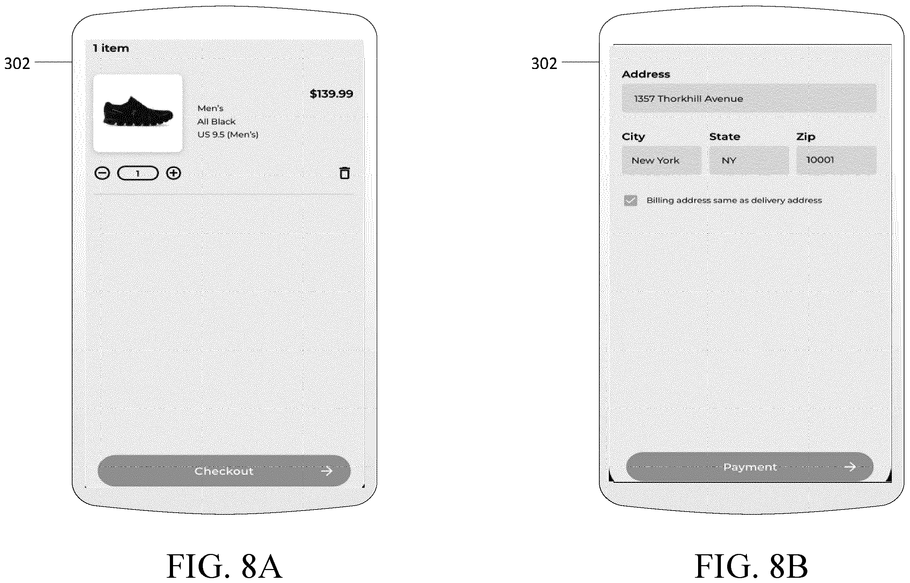

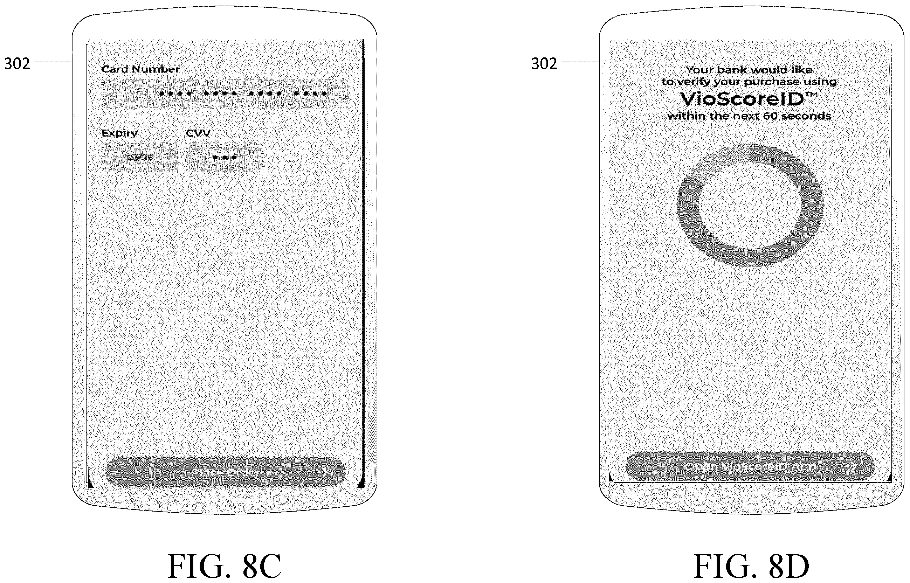

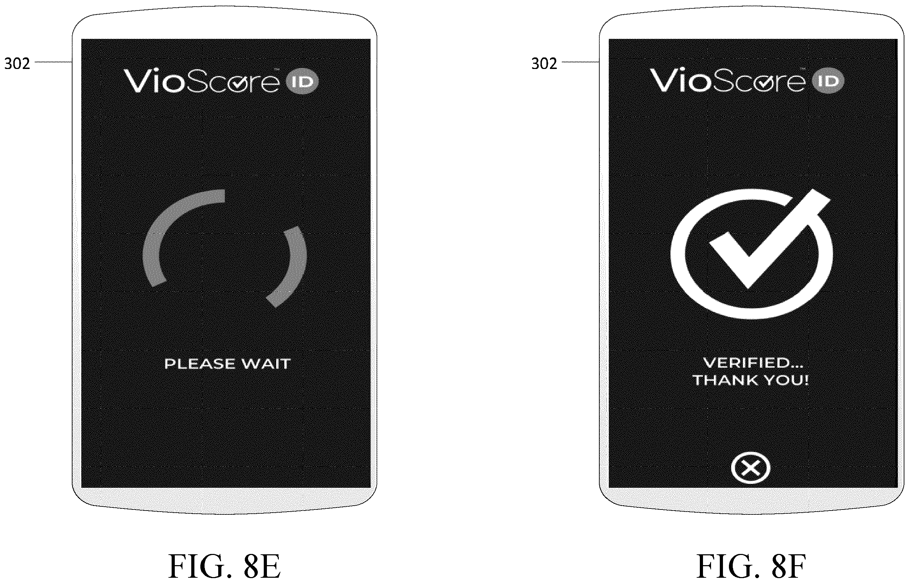

Figures 8A-8G illustrate example user interfaces for verifying a financial transaction with a financial credential authentication system. In the embodiment of FIG. 8A, the user seeks to make an online transaction to purchase footwear from an online store. In the embodiment of FIGS. 8B and 8C, the user enters the user's address and payment information, then selects the place order affordance to initiate the transaction. In the embodiment of FIG. 8D, the user's financial institution requests additional verification of the user's credentials by the financial credential authentication system, and a request to open an application associated with the financial credential authentication system is displayed on the user's device 302. In the embodiment of FIG. 8E, the user's credentials are verified by the application. In some embodiments, data that are stored on the user device 302, such as health data, credit data, environment data, and world data, are compared with corresponding data stored on the financial institution's servers and/or on the backend servers of the financial credential authentication system. For example, the user's health data that are stored on the phone are compared with the corresponding health data that are stored on the server of the financial institution to verify the user. In some embodiments, a combination of the user's data that are stored on the user device 302 (or other another device) are compared with corresponding data stored on the server of the financial institution (or the server of the financial credential authentication system). In some embodiments, one or more scores associated with the user, such as the user's health score, credit score, environment score, world score, and the user's total score that are stored on the user device 302 (or another device) are compared with corresponding scores that are stored on the server of the financial institution (or the server of the financial credential authentication system).

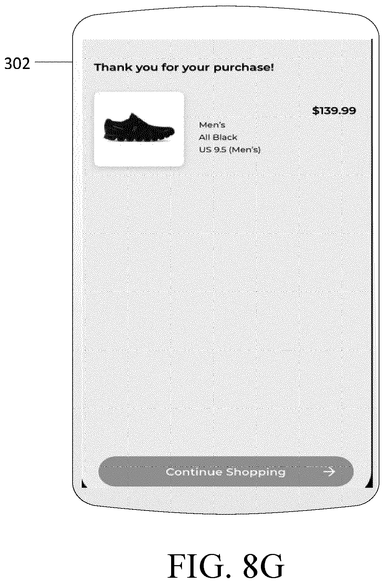

In the embodiment of FIG. 8F, an indication of successful verification of the data stored on the user's device 302 with corresponding data stored on the server of the financial institution (or on the server of the financial credential authentication system) is displayed. In the embodiment of FIG. 8G, the user's transaction continues after successful verification of the user's data. Alternatively, the user is promoted to reverify the user's data, or the transaction is terminated if data stored on the user's phone do not math corresponding data stored on the sever of the financial institution (or on the server of the financial credential authentication system). In some embodiments, once the user is verified by a vendor, the user's locally stored scores and data are accessible to the vendor to verify the user's transactions with the vendor for additional transactions. For example, once the user has successfully verified with the server of a footwear company, the user's data and scores that are locally stored on user device 302 will be automatically shared (with the user's consent) with the server of the footwear company while the user's existing secured connection with the server of the footwear company remains open to permit the user to make additional purchases from the footwear company.

As used herein, the singular forms "a," "an," and "the" are intended to include the plural forms as well, unless the context clearly indicates otherwise. It will be further understood that the terms "comprise" and/or "comprising," when used in this specification and/or in the claims, specify the presence of stated features, steps, operations, elements, and/or components, but do not preclude the presence or addition of one or more other features, steps, operations, elements, components, and/or groups thereof. In addition, the steps and components described in the above embodiments and figures are merely illustrative and do not imply that any particular step or component is a requirement of a claimed embodiment.

The following paragraphs provide a list of additional embodiments which may serve as basis for claims in this application or in any subsequently filed divisional application(s).

Embodiment 1: A computer-implemented method to authenticate a user's financial credentials, comprising: receiving a request to authenticate financial credentials of a user; determining, whether the financial credentials have been preliminarily authenticated based on static data indicative of the financial credentials of the user; in response to a determination that the financial credentials have been preliminarily authenticated, receiving dynamic data indicative of the financial credentials of the user, wherein the dynamic data are provided by an electronic device of the user; determining whether the dynamic data are valid; and in response to a determination that the dynamic data are valid, validating the financial credentials of the user.

Embodiment 2: The computer-implemented method of Embodiment 1, further comprising: in response to a determination that the dynamic data are valid, requesting a financial institution to authorize a financial transaction; and in response to a determination that the dynamic data are not valid, requesting the financial institution to decline the financial transaction.

Embodiment 3: The computer-implemented method of Embodiment 2, wherein determining whether the dynamic data are valid comprises: comparing the dynamic data provided by the electronic device with a second dynamic data; and determining the dynamic data are valid in response to determining that the dynamic data match the second dynamic data; and determining the dynamic data are not valid in response to determining that the dynamic data do not match the second dynamic data.

Embodiment 4: The computer-implemented method of Embodiment 3, further comprising: determining, from the dynamic data, a value that is associated with a financial score of the user; determining, from the second dynamic data, a second value that is associated with the financial score of the user; determining the dynamic data are valid in response to determining that the value matches the second value; and determining the dynamic data are not valid in response to determining that the value does not match the second value.

Embodiment 5: The computer-implemented method of Embodiment 4, further comprising: determining, from the dynamic data, a first set of numerical values that are associated with the financial score of the user, wherein each numerical value of the first set of numerical values represents a portion of the value; determining, from the dynamic data, a second set of numerical values that are associated with the financial score of the user, wherein each numerical value of the second set of numerical values represents a portion of the second value; determining the dynamic data are valid in response to determining that each value of the first set of values matches a corresponding value of the second set of values; and determining the dynamic data are not valid in response to determining that a value of the first set of values does not match a corresponding value of the second set of values.

Embodiment 6: The computer-implemented method of Embodiment 5, further comprising: determining, for each respective value of the first set of values, whether the respective value is within a threshold range of a corresponding value of the second set of values; determining that the respective value matches the corresponding value if the respective value is within the threshold range of the corresponding value; and determining that the respective value does not match the corresponding value if the respective value is not within the threshold range of the corresponding value.

Embodiment 7: The computer-implemented method of Embodiment 6, further comprising: determining that the respective value matches the corresponding value if the respective value is identical to the corresponding value; and determining that the respective value does not match the corresponding value if the respective value is not identical to the corresponding value.

Embodiment 8: The computer-implemented method of Embodiment 4, further comprising: determining that the value matches the corresponding value if the value is within a threshold range of the second value; and determining that the value does not match the corresponding value if the value is not within the threshold range of the second value.

Embodiment 9: The computer-implemented method of Embodiment 3, wherein determining whether the dynamic data are valid comprises: comparing a third dynamic data provided by the electronic device at a first time period with a fourth dynamic data generated at the first time period, wherein the third dynamic data predates the dynamic data; and determining the dynamic data are valid in response to determining that the third dynamic data match the fourth dynamic data; and determining the dynamic data are not valid in response to determining that the third dynamic data do not match the fourth dynamic data.

Embodiment 10: The computer-implemented method of Embodiment 9, wherein determining whether the dynamic data are valid comprises: comparing a fifth dynamic data provided by the electronic device at a second time period with a sixth dynamic data generated at the second time period, wherein the fifth dynamic data predates the dynamic data; and determining the dynamic data are valid in response to determining that the fifth dynamic data match the sixth dynamic data; and determining the dynamic data are not valid in response to determining that the fifth dynamic data do not match the sixth dynamic data.

Embodiment 11: The computer-implemented method of Embodiment 3, further comprising dynamically updating the second dynamic data.

Embodiment 12: The computer-implemented method of Embodiment 1, further comprising providing a result to the electronic device.

Embodiment 13: A financial credentials authentication system, comprising a storage medium; and a processor configured to: receive a request to authenticate financial credentials of a user; determine, whether the financial credentials have been preliminarily authenticated based on a static data indicative of the financial credentials of the user; in response to a determination that the financial credentials have been preliminarily authenticated, receive dynamic data indicative of the financial credentials of the user, wherein the dynamic data are provided by an electronic device of the user; determine whether the dynamic data are valid; and in response to a determination that the dynamic data are valid, validate the financial credentials of the user.

Embodiment 14: The financial credentials authentication system of Embodiment 13, wherein the processor is further configured to: compare the dynamic data provided by the electronic device with a second dynamic data; and determine the dynamic data are valid in response to determining that the dynamic data match the second dynamic data; and determine the dynamic data are not valid in response to determining that the dynamic data do not match the second dynamic data.

Embodiment 15: The financial credentials authentication system of Embodiment 14, wherein the processor is further configured to: determine, from the dynamic data, a value that is associated with a financial score of the user; determine, from the second dynamic data, a second value that is associated with the financial score of the user; determine the dynamic data are valid in response to determining that the value matches the second value; and determine the dynamic data are not valid in response to determining that the value does not match the second value.

Embodiment 16: The financial credentials authentication system of Embodiment 15, wherein the processor is further configured to: determine, from the dynamic data, a first set of numerical values that are associated with the financial score of the user, wherein each numerical value of the first set of numerical values represents a portion of the value; determine, from the dynamic data, a second set of numerical values that are associated with the financial score of the user, wherein each numerical value of the second set of numerical values represents a portion of the second value; determine the dynamic data are valid in response to determining that each value of the first set of values matches a corresponding value of the second set of values; and determine the dynamic data are not valid in response to determining that a value of the first set of values does not match a corresponding value of the second set of values.

Embodiment 17: The financial credentials authentication system of Embodiment 16, wherein the processor is further configured to: determine, for each respective value of the first set of values, whether the respective value is within a threshold range of a corresponding value of the second set of values; determine that the respective value matches the corresponding value if the respective value is within the threshold range of the corresponding value; and determine that the respective value does not match the corresponding value if the respective value is not within the threshold range of the corresponding value.

Embodiment 18: The financial credentials authentication system of Embodiment 14, wherein the processor is further configured to: compare a third dynamic data provided by the electronic device at a first time period with a fourth dynamic data generated at the first time period, wherein the third dynamic data predates the dynamic data; and determine the dynamic data are valid in response to determining that the third dynamic data match the fourth dynamic data; and determine the dynamic data are not valid in response to determining that the third dynamic data do not match the fourth dynamic data.

Embodiment 19: A non-transitory machine-readable medium comprising instructions, which when executed by a processor cause the processor to perform operations comprising: receiving a request to authenticate financial credentials of a user; determining, whether the financial credentials have been preliminarily authenticated based on static data indicative of the financial credentials of the user; in response to a determination that the financial credentials have been preliminarily authenticated, receiving dynamic data indicative of the financial credentials of the user, wherein the dynamic data are provided by an electronic device of the user; determining whether the dynamic data are valid; and in response to a determination that the dynamic data are valid, validating the financial credentials of the user; and requesting a financial institution to authorize a financial transaction; and in response to a determination that the dynamic data are not valid, requesting the financial institution to decline the financial transaction.

Embodiment 20: A computer-implemented method to authenticate a user's financial credentials, comprising: receiving, at an electronic device of a user, a request to authenticate financial credentials of the user; determining, whether the financial credentials have been preliminarily authenticated based on static data indicative of the financial credentials of the user; in response to a determination that the financial credentials have been preliminarily authenticated, validating, at the electronic device, login credentials of the user; and transmitting dynamic data indicative of the financial credentials of the user, wherein the dynamic data are stored electronic device of the user.

Embodiment 21: The computer-implemented method of Embodiment 20, further comprising in response to the determination that the financial credentials have been preliminarily authenticated, providing for display, a login interface, wherein the login credentials are inputted through the login interface.

Embodiment 22: The computer-implemented method of Embodiment 20, further comprising: in response to the determination that the financial credentials have been preliminarily authenticated, determining a value that is associated with a financial score of the user; and generating the dynamic data based on the financial score of the user, wherein the dynamic data represents the financial score.

Embodiment 23: The computer-implemented method of Embodiment 22, further comprising: in response to the determination that the financial credentials have been preliminarily authenticated, determining a set of numerical values that are associated with the financial score of the user, wherein each numerical value of the set of numerical values represents a portion of the value; and generating the dynamic data based on the set of numerical values.

Embodiment 24: The computer-implemented method of Embodiment 23, further comprising: dynamically updating one or more values of the set of numerical values; and generating an updated dynamic data based on an update of the one or more values of the set of numerical values.

Embodiment 25: The computer-implemented method of Embodiment 24, further comprising: dynamically updating the values; and generating an updated dynamic data based on an update of the value.

Embodiment 26: The computer-implemented method of Embodiment 20, further comprising in response to validating the login credentials of the user, transmitting a second dynamic data indicative of the financial credentials generated within a first time period, wherein the second dynamic data predates the dynamic data.

Embodiment 27: The computer-implemented method of Embodiment 20, further comprising providing, for display, a notification of whether the credentials of the user have been authenticated on the electronic device.

## Claims

1. A computer-implemented method to authenticate a user's financial credentials, comprising:
receiving a request to authenticate financial credentials of a user;
determining, whether the financial credentials have been preliminarily authenticated based on static data indicative of the financial credentials of the user;
in response to a determination that the financial credentials have been preliminarily authenticated,
receiving dynamic data indicative of the financial credentials of the user, wherein the dynamic data are provided by an electronic device of the user;
determining whether the dynamic data are valid;
and in response to a determination that the dynamic data are valid, validating the financial credentials of the user.

2. The computer-implemented method of claim 1, further comprising:
in response to a determination that the dynamic data are valid, requesting a financial institution to authorize a financial transaction; and
in response to a determination that the dynamic data are not valid, requesting the financial institution to decline the financial transaction.

3. The computer-implemented method of claim 1 or 2, wherein determining whether the dynamic data are valid comprises:
comparing the dynamic data provided by the electronic device with a second dynamic data; and
determining the dynamic data are valid in response to determining that the dynamic data match the second dynamic data; and
determining the dynamic data are not valid in response to determining that the dynamic data do not match the second dynamic data.

4. The computer-implemented method of claim 3, further comprising:
determining, from the dynamic data, a value that is associated with a financial score of the user;
determining, from the second dynamic data, a second value that is associated with the financial score of the user;
determining the dynamic data are valid in response to determining that the value matches the second value; and
determining the dynamic data are not valid in response to determining that the value does not match the second value.

5. The computer-implemented method of claim 4, further comprising:
determining, from the dynamic data, a first set of numerical values that are associated with the financial score of the user, wherein each numerical value of the first set of numerical values represents a portion of the value;
determining, from the dynamic data, a second set of numerical values that are associated with the financial score of the user, wherein each numerical value of the second set of numerical values represents a portion of the second value;
determining the dynamic data are valid in response to determining that each value of the first set of values matches a corresponding value of the second set of values; and
determining the dynamic data are not valid in response to determining that a value of the first set of values does not match a corresponding value of the second set of values.

6. The computer-implemented method of claim 5, further comprising:
determining, for each respective value of the first set of values, whether the respective value is within a threshold range of a corresponding value of the second set of values;
determining that the respective value matches the corresponding value if the respective value is within the threshold range of the corresponding value; and determining that the respective value does not match the corresponding value if the respective value is not within the threshold range of the corresponding value.

7. The computer-implemented method of claim 6, further comprising:
determining that the respective value matches the corresponding value if the respective value is identical to the corresponding value; and
determining that the respective value does not match the corresponding value if the respective value is not identical to the corresponding value.

8. The computer-implemented method of claim 4, further comprising:
determining that the value matches the corresponding value if the value is within a threshold range of the second value; and
determining that the value does not match the corresponding value if the value is not within the threshold range of the second value.

9. The computer-implemented method of claim 3, wherein determining whether the dynamic data are valid comprises:
comparing a third dynamic data provided by the electronic device at a first time period with a fourth dynamic data generated at the first time period, wherein the third dynamic data predates the dynamic data; and
determining the dynamic data are valid in response to determining that the third dynamic data match the fourth dynamic data; and
determining the dynamic data are not valid in response to determining that the third dynamic data do not match the fourth dynamic data.

10. The computer-implemented method of claim 9, wherein determining whether the dynamic data are valid comprises:
comparing a fifth dynamic data provided by the electronic device at a second time period with a sixth dynamic data generated at the second time period, wherein the fifth dynamic data predates the dynamic data; and
determining the dynamic data are valid in response to determining that the fifth dynamic data match the sixth dynamic data; and
determining the dynamic data are not valid in response to determining that the fifth dynamic data do not match the sixth dynamic data.

11. The computer-implemented method of claim 3, further comprising dynamically updating the second dynamic data.

12. The computer-implemented method of claim 1, further comprising providing a result to the electronic device.

13. A financial credentials authentication system, comprising:
a storage medium; and
a processor configured to:
receive a request to authenticate financial credentials of a user;
determine, whether the financial credentials have been preliminarily authenticated based on a static data indicative of the financial credentials of the user;
in response to a determination that the financial credentials have been preliminarily authenticated,
receive dynamic data indicative of the financial credentials of the user, wherein the dynamic data are provided by an electronic device of the user;
determine whether the dynamic data are valid;
and in response to a determination that the dynamic data are valid, validate the financial credentials of the user.

14. The financial credentials authentication system of claim 13, wherein the processor is further configured to:
compare the dynamic data provided by the electronic device with a second dynamic data; and
determine the dynamic data are valid in response to determining that the dynamic data match the second dynamic data; and
determine the dynamic data are not valid in response to determining that the dynamic data do not match the second dynamic data, and, optionally,
wherein the processor is further configured to:
determine, from the dynamic data, a value that is associated with a financial score of the user;
determine, from the second dynamic data, a second value that is associated with the financial score of the user;
determine the dynamic data are valid in response to determining that the value matches the second value; and
determine the dynamic data are not valid in response to determining that the value does not match the second value, and, optionally,
wherein the processor is further configured to:
determine, from the dynamic data, a first set of numerical values that are associated with the financial score of the user, wherein each numerical value of the first set of numerical values represents a portion of the value;
determine, from the dynamic data, a second set of numerical values that are associated with the financial score of the user, wherein each numerical value of the second set of numerical values represents a portion of the second value;
determine the dynamic data are valid in response to determining that each value of the first set of values matches a corresponding value of the second set of values; and
determine the dynamic data are not valid in response to determining that a value of the first set of values does not match a corresponding value of the second set of values, and, optionally,
wherein the processor is further configured to:
determine, for each respective value of the first set of values, whether the respective value is within a threshold range of a corresponding value of the second set of values;
determine that the respective value matches the corresponding value if the respective value is within the threshold range of the corresponding value; and
determine that the respective value does not match the corresponding value if the respective value is not within the threshold range of the corresponding value.

15. A non-transitory machine-readable medium comprising instructions, which when executed by a processor cause the processor to perform operations comprising:
receiving a request to authenticate financial credentials of a user;
determining, whether the financial credentials have been preliminarily authenticated based on static data indicative of the financial credentials of the user;
in response to a determination that the financial credentials have been preliminarily authenticated,
receiving dynamic data indicative of the financial credentials of the user, wherein the dynamic data are provided by an electronic device of the user;
determining whether the dynamic data are valid; and
in response to a determination that the dynamic data are valid, validating the financial credentials of the user; and requesting a financial institution to authorize a financial transaction; and
in response to a determination that the dynamic data are not valid, requesting the financial institution to decline the financial transaction.
